# EUROPÄISCHE PATENTSCHRIFT

(11) **EP 3 538 383 B1**
(45) Veröffentlichungstag und Bekanntmachung des Hinweises auf die Patenterteilung: **28.10.2020**
(21) Anmeldenummer: 17755500.0
(22) Anmeldetag: 22.08.2017
(51) Int. Cl.: B60C 11/13, B60C 11/03

(54) **FAHRZEUGLUFTREIFEN**
PNEUMATIC TIRE
PNEUMATIQUE

(30) Priorität: 09.11.2016 DE 102016221953
(43) Veröffentlichungstag der Anmeldung: 18.09.2019
(73) Patentinhaber: Continental Reifen Deutschland GmbH, 30165 Hannover (DE)
(72) Erfinder: RITTWEGER, Stefan, 30826 Garbsen (DE); CHONG-SHI-AI, Jenny, 52100 Kuala Lumpur (MY)
(74) Vertreter: Finger, Karsten
(86) Internationale Anmeldenummer: PCT/EP2017/071063
(87) Internationale Veröffentlichungsnummer: WO 2018/086776

(56) Entgegenhaltungen:
- JP-A- 2001 322 407
- US-A- 3 727 661

## Beschreibung

Die Erfindung betrifft ein Laufstreifenprofil eines Fahrzeugluftreifens - insbesondere eines PKW-Fahrzeugluftreifens - mit Profilpositiven, die durch Rillen voneinander getrennt sind, bei dem zwei über den Umfang erstreckte, nebeneinander angeordnete Profilbänder in axialer Richtung A durch eine Umfangsrille voneinander getrennt sind, wobei die Profilbänder in radialer Richtung R nach außen durch eine radial äußere Oberfläche und in axialer Richtung A zur Umfangsrille hin jeweils durch eine Profilbandflanke begrenzt werden, wobei die Umfangsrille nach radial innen durch einen Rillengrund und in axialer Richtung A beiderseits des Rillengrundes jeweils durch eine Profilbandflanke der angrenzenden Profilbänder begrenzt ist, wobei über den Umfang des Fahrzeugluftreifens hinweg verteilt in der Umfangsrille aus dem Rillengrund erhabene Stützkörper ausgebildet sind, die sich stegförmig von der Profilbandflanke des einen Profilbandes quer zur Umfangsrichtung U durch die Umfangsrille bis zur Profilbandflanke des zweiten Profilbandes erstrecken und diese miteinander verbinden, wobei der Stützkörper in radialer Richtung nach außen hin jeweils durch eine radial äußere Körperfläche und in Umfangsrichtung U der Körperfläche vorgeordnet und nachgeordnet jeweils durch eine Körperflanke begrenzt ist, die in radialer Richtung R vom Rillengrund bis zur Körperfläche erstreckt ist, wobei die Körperfläche in den Schnittebenen, die die Reifenachse enthalten, mit einer Schnittkontur ausgebildet ist, wobei die Schnittkontur längs ihrer Erstreckung zwischen den beiden Profilbandflanken einen veränderten Verlauf der in radialer Richtung R aus dem Rillengrund gemessene Höhe h aufweist.

Es sind Sommerreifenprofile von Personenkraftwagen (PKW) bekannt, bei denen Profilbander, wie Umfangsrippen oder Profilblockreihen, durch Umfangsrillen begrenzt sind. Die Umfangsrillen dienen dabei der Entwässerung des Laufstreifenprofils und somit der Erzielung guter Aquaplaning- Eigenschaften. Darüber hinaus beeinflusst deren Lage im Reifen auch Abrieb- und Rollwiderstand des Laufstreifenprofils. Andererseits bewirken die Umfangsrillen zwischen den mehr oder weniger steif ausgebildeten Profilbändern eine Aufweichung des Laufstreifenprofiles in Querrichtung, wodurch die Handling-Eigenschaften negativ beeinflusst werden.

Es ist bei Nutzfahrzeugreifen bekannt, im radial inneren Erstreckungsabschnitt von Umfangsrillen Körper mit Pyramidenstruktur auszubilden, die einen Steinauswurf verbessern. Diese sind dabei üblicherweise in radialer Richtung R mehr oder weniger spitz zulaufend ausgebildet und mit schräg verlaufenden Seitenflächen begrenzt, die im Rillengrund münden. Derartige Ausbildungen ermöglichen eine Verbesserung des Steinauswurfes. Zwischen den Pyramidenstrukturen und der gegenüberliegenden Rillenwand ist dabei üblicher Weise eine tiefgehende Rille aufrechterhalten zur Erzielung eines guten Wasserabflusses. Versteifungseffekte der Umfangsrille werden hierdurch nur begrenzt ermöglicht. Bei den Nutzfahrzeugreifen sind aufgrund des Einsatzes von Nutzfahrzeugen gute Handling-Eigenschaften auch bei hohen Geschwindigkeiten - anders als bei PKW-Reifen - auch nicht erforderlich.

Es ist auch bekannt, Erhebungen im Rillengrund auszubilden, welche zur Reduktion der Schallausbreitung dienen und dabei an ihrer radial äußeren Oberfläche mit verändertem Höhenverlauf ausgebildet sind. Auch diese Ausbildungen sind üblicher Weise nur beschränkt zu einer ausreichenden axialen Versteifung der Rille für gute Handling-Eigenschaften und auch beschränkt für guten Wasserdurchfluss geeignet, wodurch und Aquaplaning-Eigenschaften weiter begrenzt sind.

**Aus der** JP 2001/322407 A **ist eine Ausbildung eines Laufstreifenprofils gemäß den Merkmalen des Oberbegriffs von Anspruch 1 bekannt.**

Der Erfindung liegt daher die Aufgabe zugrunde, bei derartigen Laufstreifenprofilen mit Umfangsrillen in einfacher Weise zu ermöglichen, dass eine gute axiale Versteifung über die Umfangsrille hinweg bei aufrechter Haltung guter Aquaplaning-Eigenschaften ermöglicht wird.

Die Aufgabe wird erfindungsgemäß durch die Ausbildung eines Laufstreifenprofils eines Fahrzeugluftreifens - insbesondere eines PKW-Fahrzeugluftreifens - mit Profilpositiven, die durch Rillen voneinander getrennt sind, bei dem zwei über den Umfang erstreckte, nebeneinander angeordnete Profilbänder in axialer Richtung A durch eine Umfangsrille voneinander getrennt sind, wobei die Profilbänder in radialer Richtung R nach außen durch eine radial äußere Oberfläche und in axialer Richtung A zur Umfangsrille hin jeweils durch eine Profilbandflanke begrenzt werden, wobei die Umfangsrille nach radial innen durch einen Rillengrund und in axialer Richtung A beiderseits des Rillengrundes jeweils durch eine Profilbandflanke der angrenzenden Profilbänder begrenzt ist, wobei über den Umfang des Fahrzeugluftreifens hinweg verteilt in der Umfangsrille aus dem Rillengrund erhabene Stützkörper ausgebildet sind, die sich stegförmig von der Profilbandflanke des einen Profilbandes quer zur Umfangsrichtung U durch die Umfangsrille bis zur Profilbandflanke des zweiten Profilbandes erstrecken und diese miteinander verbinden, wobei der Stützkörper in radialer Richtung R nach außen hin jeweils durch eine radial äußere Körperfläche und in Umfangsrichtung U der Körperfläche vorgeordnet und nachgeordnet jeweils durch eine Körperflanke begrenzt ist, die in radialer Richtung R vom Rillengrund bis zur Körperfläche erstreckt ist, wobei die Körperfläche in den Schnittebenen, die die Reifenachse enthalten, mit einer Schnittkontur ausgebildet ist, wobei die Schnittkontur längs ihrer Erstreckung zwischen den beiden Profilbandflanken einen veränderten Verlauf der in radialer Richtung R aus dem Rillengrund gemessene Höhe h aufweist, gemäß den Merkmalen von Anspruch 1 gelöst, bei dem die Schnittkontur in einer Position P zwischen den beiden Profilbandflanken mit ihrem Minimalwert hₘᵢₙ ihrer Höhe h und beiderseits der Position P nach axial außen in Richtung zur jeweils angrenzenden Profilbandflanke linear ansteigend ausgebildet ist, und bei dem die Schnittkontur asymmetrisch zur Radialen durch P verlaufend ausgebildet ist,
**wobei die den Stützkörper nach radial außen begrenzende Körperfläche in ihrer in Umfangsrichtung U gemessenen Erstreckungslänge L in der Position P mit ihrem Minimum Lₘᵢₙ und beiderseits der Position P nach axial außen in Richtung zur jeweils angrenzenden Profilbandflanke hin mit zunehmender Länge L ausgebildet ist.**

Durch diese Ausbildung wird es ermöglicht, dass die Stützkörper aufgrund ihres Verlaufes der radial äußeren Körperfläche mit einer hohen axial versteifenden Wirkung in der Umfangsrille zur Wirkung kommen. Die Ausbildung mit linear ansteigender Kontur beiderseits der axialen Position P der minimalen Höhe bewirkt beiderseits dieser Position P eine jeweils rampenförmige Ausbildung des Stützkörpers, welche eine zusätzliche Versteifung der angrenzenden Profilbänder über die Umfangsrille hinweg bewirkt. Die beiderseitige Rampenform ermöglicht dabei bei minimiertem Einsatz für die Stützkörper eine optimale axiale Versteifung. Die beiderseitige rampenartige Ausbildung ermöglicht dabei dennoch einen optimalen, großen Durchflusskanal durch die Umfangsrille über den Stützkörper hinweg. Der für die beiderseitige rampenförmige Ausbildung erforderliche geringe Materialeinsatz zur Erstellung der Stützkörper ermöglicht dabei aufgrund der doppelseitigen Rampenform eine optimale Materialverteilung und aufgrund der guten Materialverteilung trotz hoher Stützwirkung nur eine geringe Beeinflussung des Wasserdurchflusses. Die beiderseitige rampenförmige Ausbildung ermöglicht darüber hinaus eine gute Versteifung der beiden an die Umfangsrille angrenzenden Profilbänder und somit eine gute Kraftübertragung in beide axiale Richtungen. Durch diese Ausbildung wird es somit ermöglicht mit einfachen Mitteln verbesserte Handling-Eigenschaften bei guten Aquaplaning-Eigenschaften umzusetzen. **Durch die Ausbildung mit der zunehmenden Länge kann die Abstützwirkung weiter verbessert eingestellt werden.**

Besonders vorteilhaft ist die Ausbildung eines Fahrzeugreifens gemäß den Merkmalen von Anspruch 2, wobei der Stützkörper in der Schnittkontur durch die Position P in axialer Richtung A in einen ersten und einen zweiten Abschnitt geteilt ist, wobei der erste Abschnitt zwischen der Position P und der Profilbandflanke des ersten Profilbandes und der zweite Abschnitt zwischen der Position P und der Profilbandflanke des zweiten Profilbandes ausgebildet ist, und wobei die Schnittkontur die Profilbandflanke des ersten Profilbandes in der maximalen Höhe h₁ des ersten Abschnitts und die Profilbandflanke des zweiten Profilbandes in der maximalen Höhe h₂ des zweiten Abschnitts schneidet mit h₂< h₁. Hierdurch kann in einfacher Weise eine größere Abstützwirkung für das erste Profilband als für das zweite Profilband individuell abgestimmt eingestellt werden. Somit kann in einfacher Weise die Abstützwirkung für die beiden Profilbänder zielgerichtet entsprechend den individuell unterschiedlichen Erfordernissen entsprechend eingestellt werden.

Besonders vorteilhaft ist die Ausbildung eines Fahrzeugreifens gemäß den Merkmalen von Anspruch 3, wobei h₁ mit (1/2)T ≤ h₁≤(2/3)T ausgebildet ist, wobei T die in der Umfangsrille gemessene maximale Rillentiefe der Umfangsrille ist. Dies ermöglicht einen guten Kompromiss aus optimierter Abstützwirkung einerseits und geringer Geräuschbildung andererseits.

Besonders vorteilhaft ist die Ausbildung eines Fahrzeugreifens gemäß den Merkmalen von Anspruch 4, wobei die Schnittkontur ausgehend von der Position P in Richtung zur Profilbandflanke des ersten Profilbandes unter Einschluss eines Neigungswinkels α zur axialen Richtung A linear ansteigend ausgebildet, und wobei die Schnittkontur ausgehend von der Position P in Richtung zur Profilbandflanke des zweiten Profilbandes unter Einschluss eines Neigungswinkels β mit α>β zur axialen Richtung A linear ansteigend ausgebildet. Hierdurch kann in einfacher Weise besonders gut die gewünschte Versteifung umgesetzt werden. Dabei kann besonders einfach und zuverlässig eine größere Abstützwirkung für das erste Profilband als für das zweite Profilband individuell abgestimmt eingestellt werden. Somit kann in einfacher Weise die Abstützwirkung für die beiden Profilbänder zielgerichtet entsprechend den individuell unterschiedlichen Erfordernissen entsprechend eingestellt werden.

Besonders vorteilhaft ist die Ausbildung eines Fahrzeugreifens gemäß den Merkmalen von Anspruch 5, wobei die den Stützkörper nach radial außen begrenzende Körperfläche in ihrer in Umfangsrichtung U gemessenen Erstreckungslänge L in der Position P mit ihrem Minimum Lₘᵢₙ und beiderseits der Position P nach axial außen in Richtung zur jeweils angrenzenden Profilbandflanke hin mit kontinuierlich zunehmender Länge L ausgebildet ist. Hierdurch kann zusätzlich die Abstützwirkung weiter verbessert eingestellt werden.

Besonders vorteilhaft ist die Ausbildung eines Fahrzeugreifens gemäß den Merkmalen von Anspruch 6, wobei die Länge L der Körperfläche in ihrer Schnittposition mit der Profilbandflanke des ersten Profilbandes die maximale Erstreckungslänge L₁ₘₐₓ des ersten Abschnitts und in ihrer Schnittposition mit der Profilbandflanke des zweiten Profilbandes die maximale Erstreckungslänge L₂ₘₐₓ des zweiten Abschnitts mit L₁ₘₐₓ > L₂ₘₐₓ aufweist. Hierdurch kann zusätzlich die größere Abstützwirkung für das erste Profilband als für das zweite Profilband noch wirksamer weiter verbessert eingestellt werden. Somit kann in einfacher Weise die Abstützwirkung für die beiden Profilbänder zielgerichtet entsprechend den individuell unterschiedlichen Erfordernissen entsprechend eingestellt werden.

Besonders vorteilhaft ist die Ausbildung eines Fahrzeugreifens gemäß den Merkmalen von Anspruch 7, wobei L₁ₘₐₓ mit 7mm≤ L₁ₘₐₓ ≤15mm und L₂ₘₐₓ mit 5mm≤ L₂ₘₐₓ ≤ 10mm ausgebildet ist. Hierdurch kann ein guter Kompromiss aus hoher Stabilität der Profilbänder und großem Rillenvolumen für guten Wasserdurchfluss sichergestellt werden.

Besonders vorteilhaft ist die Ausbildung eines Fahrzeugreifens gemäß den Merkmalen von Anspruch 8, wobei die in Umfangsrichtung U in der Umfangsrille hintereinander angeordneten Stützkörper mit einem in Umfangsrichtung U gemessenen Abstand d ihrer radial äußeren Körperflächen zueinander ausgebildet sind, wobei d mit L₁ₘₐₓ ≤d≤5 L₁ₘₐₓ. Hierdurch kann ein guter Kompromiss aus hoher Stabilität der Profilbänder und großem Rillenvolumen für gute Wasseraufhahme und Wasserabfluss umgesetzt werden.

Besonders vorteilhaft ist die Ausbildung eines Fahrzeugreifens gemäß den Merkmalen von Anspruch 9, wobei das erste Profilband die Umfangsrille in axialer Richtung A zu der als Außenschulter ausgebildeten Reifenschulter hinweisenden Seite und das zweite Profilband die Umfangsrille in axialer Richtung A zu der als Innenschulter ausgebildeten Reifenschulter hinweisenden Seite begrenzt. Hierdurch kann in einfacher Weise eine für gute Handlingeigenschaften optimierte Stützwirkung zur Übertragung der wirksamen Seitenkräfte beim Handling optimiert umgesetzt werden.

Besonders vorteilhaft ist die Ausbildung eines Fahrzeugreifens gemäß den Merkmalen von Anspruch 10, wobei das erste Profilband ein Profilband der als Außenschulter ausgebildeten Reifenschulter ist. Hierdurch kann gerad die beim Handling besonders beanspruchte Außenschulter optimiert gestützt werden.

Besonders vorteilhaft ist die Ausbildung eines Fahrzeugreifens gemäß den Merkmalen von Anspruch 11, wobei das erste Profilband eine Umfangsrippe ist. Hierdurch können die Handlingeigenschaften weiter optimiert werden. Die Ausbildung ermöglicht eine besonders gute Umsetzung bei hinsichtlich Handling besonders anspruchsvollen Reifen, beispielsweise bei Ultra-High-Performance-Reifen (UHP-Reifen).

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofils eines Fahrzeugluftreifens in Draufsicht,
- Fig.2: eine vergrößerter Ausschnitt II des Laufstreifenprofils von Fig.1 in Draufsicht,
- Fig.3: das Laufstreifenprofil von Fig.1 in Schnittdarstellung gemäß Schnitt III-III von Fig.1 und Fig.2,
- Fig.4: das Laufstreifenprofil von Fig.1 in Schnittdarstellung gemäß Schnitt IV-IV von Fig.1 und
- Fig.5: das Laufstreifenprofil von Fig.1 in Schnittdarstellung gemäß Schnitt V-V von Fig.1.

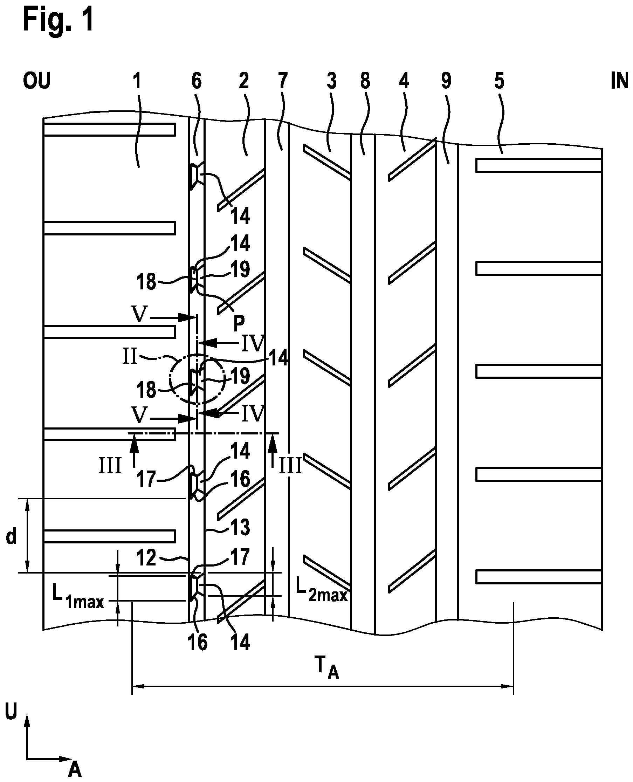

Fig.1 zeigt ein Laufstreifenprofil des Fahrzeugluftreifens eines Personenkraftwagens (Pkw) mit einer im montierten Zustand am Fahrzeug zur Reifenaußenseite (OU) weisend ausgebildeten Reifenschulter und mit einer zur Fahrzeuginnenseite (IN) weisend ausgebildeten Reifenschulter. Der Fahrzeugluftreifen ist in bekannter Weise aus mehreren in axialer Richtung A des Fahrzeugluftreifens nebeneinander angeordneten Umfangsrippen 1, 2, 3, 4 und 5 bekannter Art ausgebildet. Die Umfangsrippen 1 und 5 sind dabei als Schulterrippen in bekannter Weise jeweils auf einer Reifenschulter angeordnet ausgebildet. Dabei ist die Umfangsrippe 1 auf der die Außenschulter (OU) bildenden Reifenschulter und die Umfangsrippe 5 auf der die Innenschulter (IN) bildenden Reifenschulter ausgebildet. Die Umfangsrippen 2, 3 und 4 sind in axialer Richtung A des Fahrzeugluftreifens zwischen diesen beiden Umfangsrippen 1 und 5 angeordnet. Die Umfangsrippen 1, 2, 3, 4 und 5 sind jeweils in Umfangsrichtung U des Fahrzeugluftreifens ausgerichtet und erstrecken sich über den gesamten Umfang des Fahrzeugluftreifens.

Die Umfangsrippe 1 ist in axialer Richtung A von der benachbarten Umfangsrippe 2 in bekannter Weise durch eine über den gesamten Umfang des Fahrzeugluftreifens erstreckte und in Umfangsrichtung U ausgerichtete Umfangsrille 6 getrennt. Die Umfangsrippe 2 ist in axialer Richtung A von der benachbarten Umfangsrippe 3 durch eine über den gesamten Umfang des Fahrzeugluftreifens erstreckte und in Umfangsrichtung U ausgerichtete Umfangsrille 7 getrennt. Die Umfangsrippe 3 ist in axialer Richtung A von der benachbarten Umfangsrippe 4 durch eine über den gesamten Umfang des Fahrzeugluftreifens erstreckte und in Umfangsrichtung U ausgerichtete Umfangsrille 8 getrennt. Die Umfangsrippe 4 ist in axialer Richtung A von der zu ihr benachbarten Umfangsrippe 5 durch eine über den gesamten Umfang des Fahrzeugluftreifens erstreckte und in Umfangsrichtung U ausgerichtete Umfangsrille 9 getrennt.

In Fig. 1 ist die axiale Erstreckungsbreite T_{A} der Bodenaufstandsfläche im Normzustand eingetragen, welche sich aus dem axialen Erstreckungsbereich der Umfangsrippe 1 bis in den axialen Erstreckungsbereich der Umfangsrippe 5 erstreckt.

Die Umfangsrippen 1, 2, 3, 4 und 5 sind in radialer Richtung R nach außen hin durch eine radial äußere Oberfläche 10 begrenzt, welche innerhalb der Bodenaufstandsfläche die Straßenkontaktoberfläche des Laufstreifenprofiles bildet.

Die Umfangsrillen 6, 7, 8 und 9 sind in radialer Richtung R nach innen hin jeweils durch einen über den gesamten Umfang des Fahrzeugluftreifens erstreckten und in Umfangsrichtung U ausgerichteten Rillengrund 11 begrenzt.

Die Umfangsrippe 1 ist zur Umfangsrille 6 hin in axialer Richtung A durch eine über den gesamten Umfang des Fahrzeugluftreifens erstreckte und in Umfangsrichtung U ausgerichtete Rippenflanke 12 begrenzt. Die Rippenflanke 12 erstreckt sich in radialer Richtung R ausgehend vom Rillengrund 11 der Umfangsrille 6 bis zur radial äußeren Oberfläche 10 der Umfangsrippe 1 und bildet die zur Umfangsrippe 1 weisende Rillenwand der Umfangsrille 6. Die Umfangsrippe 2 ist in axialer Richtung A zur Umfangsrille 6 hin durch eine über den gesamten Umfang des Fahrzeugluftreifens erstreckte und in Umfangsrichtung ausgerichtete Rippenflanke 13 begrenzt. Die Rippenflanke 13 erstreckt sich in radialer Richtung R ausgehend vom Rillengrund 11 der Umfangsrille 6 nach außen bis zur radial äußeren Oberfläche 10 der Umfangsrippe 2 und bildet dabei die zur Umfangsrippe 2 hinweisende Rillenwand der Umfangsrille 6.

In analoger Weise ist die Umfangsrippe 2 in axialer Richtung A zur Umfangsrille 7 durch eine Rippenflanke begrenzt, welche die zur Umfangsrippe 2 hinweisende Rillenwand der Umfangsrille 7 bildet. Ebenso ist die Umfangsrippe 3 in axialer Richtung A zur Umfangsrille 7 hin und zur Umfangsrille 8 hin jeweils durch eine Rippenflanke begrenzt, welche eine Rillenwand der jeweils angrenzenden Umfangsrille 7 bzw.8 bildet. In analoger Weise ist auch die Umfangsrippe 4 in axialer Richtung A zur Umfangsrille 8 hin und zur Umfangsrille 9 hin jeweils durch einer Rippenflanke begrenzt, welche eine Rillenwand der jeweils angrenzenden Umfangsrille 8 bzw.9 bildet. Ebenso ist die Umfangsrippe 5 in axialer Richtung A zur Umfangsrille 9 durch eine Rippenflanke begrenzt welche die zur Umfangsrippe 5 hinweisende Rillenwand der Umfangsrille 9 bildet.

In der Umfangsrille 6 sind über den Umfang des Fahrzeugluftreifens verteilt hintereinander angeordnet Stützkörper 14 ausgebildet, welche sich als Erhebung aus dem Rillengrund 11 der Umfangsrille 6 in radialer Richtung R nach außen hin bis zu einer den Stützkörper 14 nach radial außen hin begrenzenden radial äußeren Körperfläche 15 erstrecken und dort in radialer Richtung R enden. Die Stützkörper 14 erstrecken sich dabei in axialer Richtung A ausgehend von der Flanke 13 der Umfangsrippe 2 bis zur Flanke 12 der Umfangsrippe 1 und verbinden diese in axialer Richtung A. Die Stützkörper 14 sind in Umfangsrichtung U des Fahrzeugluftreifens der radial äußeren Körperfläche 15 vorgeordnet jeweils durch eine Körperflanke 16 und der radial äußeren Körperfläche 15 nachgeordnet durch eine Körperflanke 17 begrenzt. Die Körperflanke 16 erstreckt sich dabei ausgehend vom Rillengrund 11 der Rille 6 in radialer Richtung R nach außen bis zur radial äußeren Körperfläche 15. Ebenso erstreckt sich die Körperflanke 17 in radialer Richtung R ausgehend vom Rillengrund 11 der Rille 6 bis zur radial äußeren Körperfläche 15. In axialer Richtung A erstrecken sich die Körperflanke 16 die Körperflanke 17 jeweils von der Flanke 12 der Umfangsrippe 1 bis zur Flanke 13 der Umfangsrippe 2 und verbinden diese.

Der Stützkörper 14 ist in axialer Richtung A des Fahrzeugluftreifens jeweils aus zwei in axialer Richtung A nebeneinander angeordneten Körperabschnitten 18 und 19 ausgebildet. Der Körperabschnitt 18 erstreckt sich dabei ausgehend von der Flanke 12 der Umfangsrippe 1 in axialer Richtung A bis in eine axiale Position P. Der Körperabschnitt 19 erstreckt sich in axialer Richtung A des Fahrzeugluftreifens ausgehend von der Position P bis zur Flanke 13 der Umfangsrippe 2.

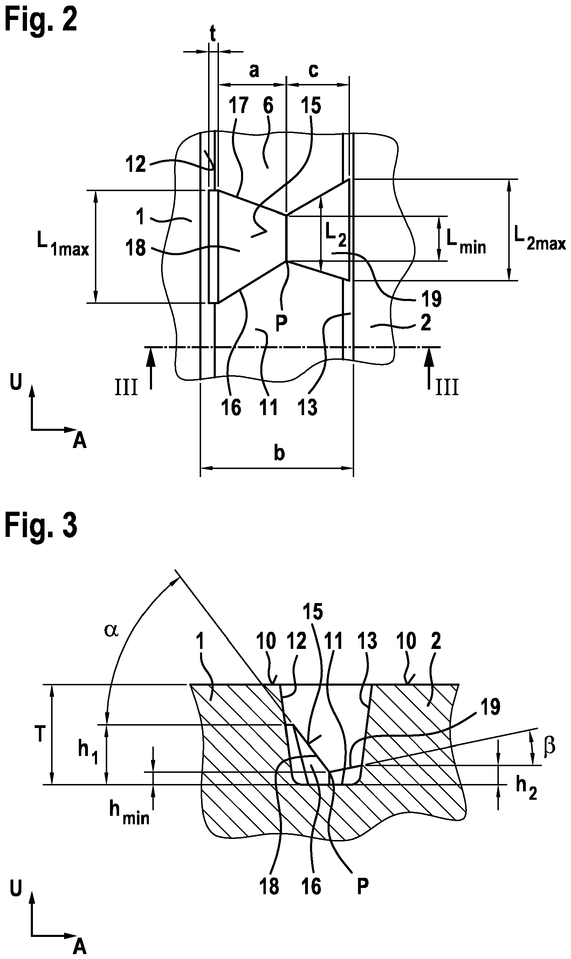

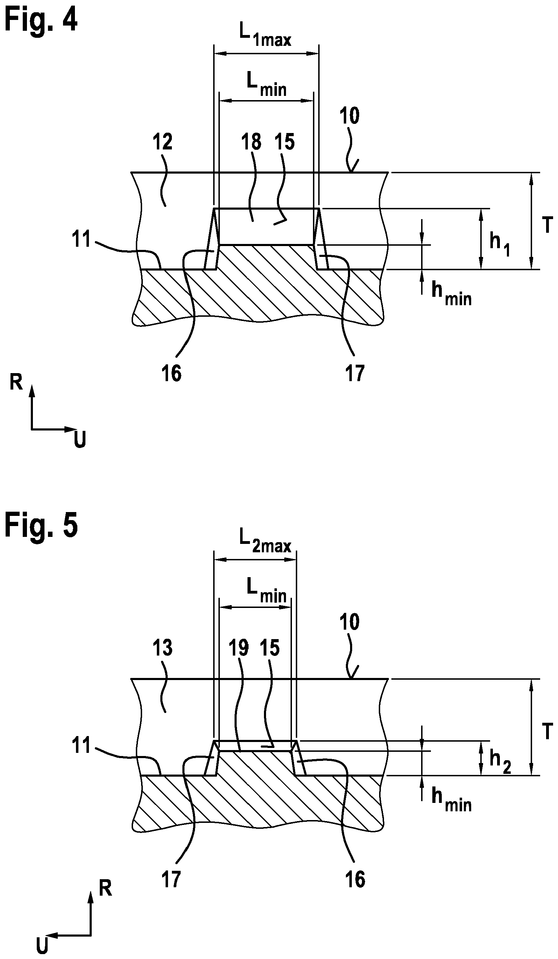

Die Umfangsrille 6 ist - wie in den Figuren 3 bis 5 dargestellt ist - mit einer in radialer Richtung R zwischen der radial äußeren Oberfläche 10 in der Position der Umfangsrille 6 und dem tiefsten Punkt des Rillengrundes 11 gemessenen Tiefe T ausgebildet, die die Profiltiefe bildet.

Die radial äußere Körperfläche 15 des Stützkörpers 14 ist in der axialen Position P mit ihrer minimalen, in radialer Richtung R ausgehend vom Rillengrund 11 nach außen gemessenen hₘᵢₙ ausgebildet.

Wie in Fig. 3 zu erkennen ist, bildet die radial äußere Körperfläche 15 des Stützkörpers 14 in den Schnittebenen, die die Reifenachse beinhalten, eine Schnittkontur, welche im zweiten Körperabschnitt 19 längs ihrer axialen Erstreckung ausgehend von der Position P bis hin zur Flanke 13 geradlinig erstreckt und unter Einschluss eines Neigungswinkels β zur axialen Richtung A, in radialer Richtung R linear ansteigend ausgebildet ist und die Flanke 13 in einer Höhe h₂ mit h₂ > hₘᵢₙ schneidet. Die Höhe h der radial äußeren Körperfläche 15 nimmt somit längs der axialen Erstreckung ausgehend von P bis zur Flanke 13 hin kontinuierlich zu. Die in axialer Richtung A gemessene Erstreckung zwischen der Position P und der Schnittposition der radial äußeren Körperfläche 15 mit der Flanke 13 bildet - wie er in Fig. 2 dargestellt ist - den axialen Abstand c.

Ebenso bildet - wie in den Figuren 2, 3 und 4 dargestellt ist - die radial äußere Körperfläche 15 des Stützkörpers 14 in den Schnittebenen, die die Reifenachse beinhalten, eine Schnittkontur, welche im ersten Körperabschnitt 18 ausgehend vom Punkt P in Richtung zur Flanke 12 hin längs ihrer Erstreckung über einen in axialer Richtung A gemessenen Erstreckungsabschnitt der Länge a mit kontinuierlich zunehmender Höhe h geradlinig erstreckt und unter Einschluss eines Neigungswinkels α zur axialen Richtung A in radialer Richtung R linear ansteigend ausgebildet mit α > β. Der Erstreckungsabschnitt der Länge a bildet dabei den wesentlichen axialen Erstreckungsabschnitt körperfläche 15 im ersten Körperabschnitt 18. Lediglich unmittelbar im Übergang zur Flanke 12 ist in einem kurzen, an den Erstreckungsabschnitt der Länge a unmittelbar anschließendne Erstreckungsabschnitt der in axialer Richtung gemessenen Erstreckungslänge **t** mit **t** < (1/5)a die Schnittkontur der radial äußere Körperfläche 15 und somit die Körperfläche 15 mit konstanter Erstreckungshöhe h₁ ausgebildet. Die Erstreckungshöhe h₁ ist die maximale Erstreckungshöhe der radial äußeren Körperfläche 15 des Stützkörpers 14 im Körperabschnitt 18 bildet. Die Schnittkontur der radial äußeren Körperfläche 15 und somit die Körperfläche 15 erstreckt sich dabei längs der axialen Erstreckung im Erstreckungsabschnitt der Länge f bis zur Flanke 12 und schneidet diese in der Höhe h₁.

Die Höhe h₁ ist dabei mit h₁ > h₂ ausgebildet. Für die Höhe h₁ gilt dabei 0,5T ≤ h₁≤ (2/3)T.

Für die axialen Erstreckungslängen gilt dabei (4/3)c ≥ (a+f) ≥ c.

Die Erstreckungslänge **t** ist mit **t** < 1mm gewählt.

Beispielsweise ist a = 6mm und **t** = 0,5mm und die Erstreckungslänge c mit c = 7,5mm gewählt ausgebildet.

Die Winkel α sind mit 50°≤ α ≤60° und β mit 10°≤ β ≤15° ausgebildet.

Die radial äußere Körperfläche 15 des Stützkörpers 14 ist - wie in Fig.1 und Fig.2 zu erkennen ist - in der axialen Position P mit ihrer minimalen in Umfangsrichtung U gemessenen Erstreckungslänge Lₘᵢₙ ausgebildet. Längs der axialen Erstreckung des Körperfläche 15 ausgehend von der Position P bis zur Schnittlinie mit der Flanke 13 nimmt die in der Umfangsrichtung gemessene Erstreckungslänge L der radial äußeren Körperfläche 15 im zweiten Körperabschnitt 19 kontinuierlich - und im dargestellten Ausführungsbeispiel linear - zu. In der Schnittfläche mit der Flanke 13 nimmt Erstreckungslänge L einen Maximalwert L₂ₘₐₓ ein.

In analoger Weise nimmt die in Umfangsrichtung U gemessene Erstreckungslinie L der radial äußeren Körperfläche 15 längs der axialen Erstreckung des Körperfläche 15 ausgehend von der Postion P über ihre axiale Erstreckung in Richtung Flanke 12 über die Erstreckungslänge a hin kontinuierlich - und im dargestellten Ausführungsbeispiel linear - bis zur Erreichung eines maximalen Maßes L₁ₘₐₓ im axialen Abstand a von der Position P zu. Über den kurzen Resterstreckungsabschnitt der axialen Erstreckungslänge f bis zur Schnittlinie der radial äußere Körperfläche 14 mit der Flanke 12 bleibt die Erstreckungslänge L radial äußeren Körperfläche 15 im ersten Körperabschnitt 18 mit ihrem konstanten Maximalwert L₁ₘₐₓ ausgebildet.

Dabei die Länge L₁ₘₐₓ mit L₁ₘₐₓ > L₂ₘₐₓ ausgebildet.

L₁ₘₐₓ ist dabei mit 7mm ≤ L₁ₘₐₓ ≤ 15mm und L₂ₘₐₓ mit 5mm ≤ L₂ₘₐₓ ≤ 10mm ausgebildet. Die minimale Länge Lₘᵢₙ ist mit 3mm ≤ Lₘᵢₙ ≤ 7mm ausgebildet, wobei Lₘᵢₙ < L₂ₘₐₓ < L₁ₘₐₓ umgesetzt ist.

Wie in Fig. 1 dargestellt ist, ist der in Umfangsrichtung U gemessene Abstand d zwischen den in Umfangsrichtung U hintereinander angeordneten radial äußeren Körperflächen 15 zweier benachbarter Stützkörper 14 mit 5L₁ₘₐₓ ≥ d ≥ L₁ₘₐₓ ausgebildet.

Beispielsweise ist L₁ₘₐₓ = 10mm, L₂ₘₐₓ = 8mm, Lₘᵢₙ = 4mm und d zwischen 3L₁ₘₐₓ und 4L₁ₘₐₓ gewählt ausgebildet.

In den dargestellten und beschriebenen Ausführungsbeispielen ist im ersten Körperabschnitt 18 die radial äußere Körperfläche 15 aus einem Haupterstreckungsabschnitt der Erstreckungslänge a und einem kurzen Übergangsabschnitt zur Flanke 12 hin mit der kurzen Erstreckungslänge **t** ausgebildet. In einem anderen, nicht dargestellten Ausführungsbeispiel ist die radial äußere Körperfläche 15 längs seiner gesamten axialen Erstreckung im ersten Körperabschnitt 18 ausgehend von der Position P bis zur Schnittlinie mit der Flanke 12 hin mit linear ansteigender Höhe unter Einschluss des Neigungswinkels α zur axialen Richtung A und unter kontinuierlicher Zunahme der Erstreckungslänge L kontinuierlich vergrößert ausgebildet, wobei erst in der Schnittlinie mit der Flanke 12 die maximale Erstreckungslinie L₁ₘₐₓ und die maximale Höhe h₁ erreicht wird. In diesem Fall ist die gesamte axiale Erstreckung ausgehend von der Position P bis zur Schnittlinie mit der Flanke 12 durch den Erstreckungsabschnitt a ausgebildet. Der Erstreckungsabschnitt f ist in dieser Ausführung mit **t** = 0 gewählt.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Radial äußere Oberfläche
- 11: Rillengrund
- 12: Rippenflanke
- 13: Rippenflanke
- 14: Stützkörper
- 15: Radial äußere Körperfläche
- 16: Körperflanke
- 17: Körperflanke
- 18: Körperabschnitt
- 19: Körperabschnitt

## Patentansprüche

1. Laufstreifenprofil eines Fahrzeugluftreifens - insbesondere eines PKW-Fahrzeugluftreifens - mit Profilpositiven, die durch Rillen voneinander getrennt sind, bei dem zwei über den Umfang erstreckte, nebeneinander angeordnete Profilbänder (1,2) in axialer Richtung A durch eine Umfangsrille (6) voneinander getrennt sind, wobei die Profilbänder (1,2) in radialer Richtung R nach außen durch eine radial äußere Oberfläche (10) und in axialer Richtung A zur Umfangsrille hin jeweils durch eine Profilbandflanke (12,13) begrenzt werden, wobei die Umfangsrille (6) nach radial innen durch einen Rillengrund (11) und in axialer Richtung A beiderseits des Rillengrundes (11) jeweils durch eine Profilbandflanke (12,13) der angrenzenden Profilbänder (1,2) begrenzt ist, wobei über den Umfang des Fahrzeugluftreifens hinweg verteilt in der Umfangsrille (6) aus dem Rillengrund (11) erhabene Stützkörper (14) ausgebildet sind, die sich stegförmig von der Profilbandflanke (12) des einen Profilbandes (1) quer zur Umfangsrichtung U durch die Umfangsrille (6) bis zur Profilbandflanke (13) des zweiten Profilbandes (2) erstrecken und diese miteinander verbinden, wobei der Stützkörper (14) in radialer Richtung R nach außen hin jeweils durch eine radial äußere Körperfläche (15) und in Umfangsrichtung U der Körperfläche (15) vorgeordnet und nachgeordnet jeweils durch eine Körperflanke (16,17) begrenzt ist, die in radialer Richtung R vom Rillengrund (11) bis zur Körperfläche (15) erstreckt ist, wobei die Körperfläche (15) in den Schnittebenen, die die Reifenachse enthalten, mit einer Schnittkontur ausgebildet ist, wobei die Schnittkontur längs ihrer Erstreckung zwischen den beiden Profilbandflanken (12,13) einen veränderten Verlauf der in radialer Richtung R aus dem Rillengrund (11) gemessene Höhe h aufweist, wobei die Schnittkontur in einer Position P zwischen den beiden Profilbandflanken (12,13) mit ihrem Minimalwert hₘᵢₙ ihrer Höhe h und beiderseits der Position P nach axial außen in Richtung zur jeweils angrenzenden Profilbandflanke (12,13) linear ansteigend ausgebildet ist, und wobei die Schnittkontur asymmetrisch zur Radialen durch P verlaufend ausgebildet ist,
**dadurch gekennzeichnet,**
**dass** die den Stützkörper (14) nach radial außen begrenzende Körperfläche(15) in ihrer in Umfangsrichtung U gemessenen Erstreckungslänge L in der Position P mit ihrem Minimum Lmin und beiderseits der Position P nach axial außen in Richtung zur jeweils angrenzenden Profilbandflanke (12,13) hin mit zunehmender Länge L ausgebildet ist.

2. Laufstreifenprofil gemäß den Merkmalen von Anspruch 1,
wobei der Stützkörper (14) in der Schnittkontur durch die Position P in axialer Richtung A in einen ersten (18) und einen zweiten (19) Körperabschnitt geteilt ist,
wobei der erste Körperabschnitt (18) zwischen der Position P und der Profilbandflanke (12) des ersten Profilbandes (1) und der zweite Körperabschnitt (19) zwischen der Position P und der Profilbandflanke (13) des zweiten Profilbandes (2) ausgebildet ist,
wobei die Schnittkontur die Profilbandflanke (12) des ersten Profilbandes (1) in der maximalen Höhe h₁ des ersten Körperabschnitts (18) und die Profilbandflanke (13) des zweiten Profilbandes (2) in der maximalen Höhe h₂ des zweiten Körperabschnitts (19) schneidet mit h₂< h₁.

3. Laufstreifenprofil gemäß den Merkmalen von Anspruch 1 oder 2,
wobei h₁ mit (1/2)T ≤ h₁≤(2/3)T ausgebildet ist, wobei T die in der Umfangsrille (6) gemessene maximale Rillentiefe der Umfangsrille (6) ist.

4. Laufstreifenprofil gemäß den Merkmalen von einem oder mehreren der vorangegangenen Ansprüche,
wobei die Schnittkontur ausgehend von der Position P in Richtung zur Profilbandflanke (12) des ersten Profilbandes (1) hin unter Einschluss eines Neigungswinkels α zur axialen Richtung A linear ansteigend ausgebildet, und
wobei die Schnittkontur ausgehend von der Position P in Richtung zur Profilbandflanke (13) des zweiten Profilbandes (2) unter Einschluss eines Neigungswinkels β mit α>β zur axialen Richtung A linear ansteigend ausgebildet.

5. Laufstreifenprofil gemäß den Merkmalen von einem oder mehreren der vorangegangenen Ansprüche,
wobei die den Stützkörper (14) nach radial außen begrenzende Körperfläche(15) in ihrer in Umfangsrichtung U gemessenen Erstreckungslänge L in der Position P mit ihrem Minimum Lmin und beiderseits der Position P nach axial außen in Richtung zur jeweils angrenzenden Profilbandflanke (12,13) hin mit kontinuierlich zunehmender Länge L ausgebildet ist.

6. Laufstreifenprofil gemäß den Merkmalen von Anspruch **1,**
wobei die Länge L der Körperfläche (15) in ihrer Schnittposition mit der Profilbandflanke (12) des ersten Profilbandes (1) die maximale Erstreckungslänge L₁ₘₐₓ des ersten Abschnitts (18) und in ihrer Schnittposition mit der Profilbandflanke (13) des zweiten Profilbandes (2) die maximale Erstreckungslänge L₂ₘₐₓ des zweiten Abschnitts (19) mit L₁ₘₐₓ > L₂ₘₐₓ aufweist.

7. Laufstreifenprofil gemäß den Merkmalen von Anspruch 6,
wobei L₁ₘₐₓ mit 7mm≤ L₁ₘₐₓ ≤15mm und L₂ₘₐₓ mit 5mm≤ L₂ₘₐₓ ≤ 10mm ausgebildet ist.

8. Laufstreifenprofil gemäß den Merkmalen von einem oder mehreren der vorangegangenen Ansprüche,
wobei die in Umfangsrichtung U in der Umfangsrille (6) hintereinander angeordneten Stützkörper (14) mit einem in Umfangsrichtung U gemessenen Abstand d ihrer radial äußeren Körperflächen (15) zueinander ausgebildet sind, wobei d mit L₁ₘₐₓ ≤d≤5 L₁ₘₐₓ

9. Laufstreifenprofil gemäß den Merkmalen von einem oder mehreren der vorangegangenen Ansprüche,
wobei das erste Profilband (1) die Umfangsrille (6) in axialer Richtung A zu der als Außenschulter (OU) ausgebildeten Reifenschulter hinweisenden Seite und das zweite Profilband (2) die Umfangsrille (6) in axialer Richtung A zu der als Innenschulter (IN) ausgebildeten Reifenschulter hinweisenden Seite begrenzt.

10. Laufstreifenprofil gemäß den Merkmalen von Anspruch 8,
wobei das erste Profilband (1) ein Profilband der als Außenschulter (OU) ausgebildeten Reifenschulter ist.

11. Laufstreifenprofil gemäß den Merkmalen von einem oder mehreren der vorangegangenen Ansprüche,
wobei das erste Profilband (1) eine Umfangsrippe ist.

## Claims

1. Tread profile of a pneumatic vehicle tyre - in particular a pneumatic car tyre - with profile positives that are separated from one another by grooves, in which two profile strips (1, 2) that are made to extend over the circumference and are arranged next to one another are separated from one another in the axial direction A by a circumferential groove (6), wherein the profile strips (1, 2) are delimited outwards in the radial direction R by a radially outer surface (10) and in the axial direction A towards the circumferential groove respectively by a profile strip flank (12, 13), wherein the circumferential groove (6) is delimited radially inwards by a groove base (11) and in the axial direction A on both sides of the groove base (11) respectively by a profile strip flank (12, 13) of the adjacent profile strips (1, 2), wherein, distributed over the circumference of the pneumatic vehicle tyre, there are formed in the circumferential groove (6) supporting bodies (14) which are raised from the groove base (11) and extend in the form of webs from the profile strip flank (12) of the one profile strip (1) transversely to the circumferential direction U through the circumferential groove (6) to the profile strip flank (13) of the second profile strip (2) and connect them to one another, wherein the supporting body (14) is delimited outwards in the radial direction R respectively by a radially outer body surface (15) and upstream and downstream of the body surface (15) in the circumferential direction U respectively by a body flank (16, 17), which is made to extend in the radial direction R from the groove base (11) to the body surface (15), wherein the body surface (15) is formed with a sectional contour in the sectional planes that contain the tyre axis, wherein the sectional contour has along its extent between the two profile strip flanks (12, 13) an altered course of the height h measured in the radial direction R from the groove base (11), wherein the sectional contour is formed with its minimum value hₘᵢₙ of its height h in a position P between the two profile strip flanks (12, 13) and rising linearly axially outwards in the direction of the respectively adjacent profile strip flank (12, 13) on both sides of the position P, and wherein the sectional contour is formed running asymmetrically in relation to the radial through P,
**characterized**
**in that** the body surface (15) delimiting the supporting body (14) radially outwards is formed in its length of extent L, measured in the circumferential direction U, with its minimum Lₘᵢₙ in the position P and with increasing length L axially outwards in the direction of the respectively adjacent profile strip flank (12, 13) on both sides of the position P.

2. Tread profile according to the features of Claim 1,
wherein the supporting body (14) is divided in the sectional contour by the position P in the axial direction A into a first body portion (18) and a second body portion (19), wherein the first body portion (18) is formed between the position P and the profile strip flank (12) of the first profile strip (1) and the second body portion (19) is formed between the position P and the profile strip flank (13) of the second profile strip (2),
wherein the sectional contour intersects the profile strip flank (12) of the first profile strip (1) at the maximum height h₁ of the first body portion (18) and the profile strip flank (13) of the second profile strip (2) intersects it at the maximum height h₂ of the second body portion (19), with h₂ < h₁.

3. Tread profile according to the features of Claim 1 or 2,
wherein h₁ is formed with (1/2) T ≤ h₁ ≤ (2/3) T, where T is the maximum groove depth of the circumferential groove (6), measured in the circumferential groove (6).

4. Tread profile according to the features of one or more of the preceding claims,
wherein the sectional contour is formed rising linearly from the position P in the direction of the profile strip flank (12) of the first profile strip (1) to include an angle of inclination α in relation to the axial direction A, and wherein the sectional contour is formed rising linearly from the position P in the direction of the profile strip flank (13) of the second profile strip (2) to include an angle of inclination β, with α > β, in relation to the axial direction A.

5. Tread profile according to the features of one or more of the preceding claims,
wherein the body surface (15) delimiting the supporting body (14) radially outwards is formed in its length of extent L, measured in the circumferential direction U, with its minimum Lₘᵢₙ in the position P and with continuously increasing length L axially outwards in the direction of the respectively adjacent profile strip flank (12, 13) on both sides of the position P.

6. Tread profile according to the features of Claim 1,
wherein the length L of the body surface (15) has a maximum length of extent L₁ₘₐₓ of the first portion (18) in its sectional position with the profile strip flank (12) of the first profile strip (1) and has the maximum length of extent L₂ₘₐₓ of the second portion (19) in its sectional position with the profile strip flank (13) of the second profile strip (2), with L₁ₘₐₓ > L₂ₘₐₓ.

7. Tread profile according to the features of Claim 6,
wherein L₁ₘₐₓ is formed with 7 mm ≤ L₁ₘₐₓ ≤ 15 mm and L₂ₘₐₓ is formed with 5 mm ≤ L₂ₘₐₓ ≤ 10 mm.

8. Tread profile according to the features of one or more of the preceding claims,
wherein the supporting bodies (14) arranged one behind the other in the circumferential direction U in the circumferential groove (6) are formed with a distance d, measured in the circumferential direction U, of the radially outer body surfaces (15) from one another, wherein d with L₁ₘₐₓ ≤ d ≤ 5 L₁ₘₐₓ.

9. Tread profile according to the features of one or more of the preceding claims,
wherein the first profile strip (1) delimits the circumferential groove (6) in the axial direction A to the side facing the tyre shoulder formed as the outer shoulder (OU) and the second profile strip (2) delimits the circumferential groove (6) in the axial direction A to the side facing the tyre shoulder formed as the inner shoulder (IN).

10. Tread profile according to the features of Claim 8,
wherein the first profile strip (1) is a profile strip of the tyre shoulder formed as the outer shoulder (OU).

11. Tread profile according to the features of one or more of the preceding claims,
wherein the first profile strip (1) is a circumferential rib.

## Revendications

1. Profil de bande de roulement d'un pneumatique de véhicule, en particulier d'un pneumatique de véhicule léger, comprenant des parties profilées positives, qui sont séparées les unes des autres par des rainures, dans lequel deux bandes profilées (1, 2) disposées l'une à côté de l'autre, s'étendant sur la périphérie, sont séparées l'une de l'autre dans la direction axiale A par une rainure périphérique (6), les bandes profilées (1, 2) étant limitées dans la direction radiale R vers l'extérieur par une surface radialement extérieure (10), et, dans la direction axiale A vers la rainure périphérique, à chaque fois par un flanc de bande profilée (12, 13), la rainure périphérique (6) étant limitée radialement vers l'intérieur par un fond de rainure (11) et dans la direction axiale A de chaque côté du fond de rainure (11) à chaque fois par un flanc de bande profilée (12, 13) des bandes profilées adjacentes (1, 2), des corps de support (14) saillant depuis le fond de rainure (11) étant réalisés de manière répartie sur la périphérie du pneumatique de véhicule dans la rainure périphérique (6), lesquels s'étendent en forme de nervures depuis le flanc de bande profilée (12) de l'une des bandes profilées (1) transversalement à la direction périphérique U à travers la rainure périphérique (6) jusqu'au flanc de bande profilée (13) de la deuxième bande profilée (2) et les relient l'une à l'autre, le corps de support (14) étant limité dans la direction radiale R vers l'extérieur à chaque fois par une surface de corps radialement extérieure (15) et dans la direction périphérique U avant et après la surface de corps (15), à chaque fois par un flanc de corps (16, 17), lequel s'étend dans la direction radiale R depuis le fond de rainure (11) jusqu'à la surface de corps (15), la surface de corps (15) étant réalisée avec un contour de coupe dans les plans de coupe qui contiennent l'axe du pneu, le contour de coupe présentant le long de son étendue entre les deux flancs de bande profilée (12, 13) une allure modifiée de hauteur h mesurée dans la direction radiale R à partir du fond de rainure (11), le contour de coupe, dans une position P entre les deux flancs de bande profilée (12, 13), étant réalisé de manière à croître linéairement avec sa valeur minimale hₘᵢₙ de sa hauteur h et des deux côtés de la position P axialement vers l'extérieur dans la direction du flanc de bande profilée adjacent respectif (12, 13), et le contour de coupe étant réalisé de manière à s'étendre asymétriquement par rapport à la direction radiale à travers P,
**caractérisé en ce que**
la surface de corps (15) limitant radialement vers l'extérieur le corps de support (14) est réalisée dans sa longueur d'étendue L mesurée dans la direction périphérique U dans la position P avec son minimum Lₘᵢₙ et des deux côtés de la position P axialement vers l'extérieur dans la direction du flanc de bande profilée adjacent respectif (12, 13) avec une longueur croissante L.

2. Profil de bande de roulement selon les caractéristiques de la revendication 1,
dans lequel le corps de support (14) dans le contour de coupe est divisé par la position P dans la direction axiale A en une première (18) et une deuxième (19) portion de corps, la première portion de corps (18) étant réalisée entre la position P et le flanc de bande profilée (12) de la première bande profilée (1) et la deuxième portion de corps (19) étant réalisée entre la position P et le flanc de bande profilée (13) de la deuxième bande profilée (2),
le contour de coupe coupant le flanc de bande profilée (12) de la première bande profilée (1) à la hauteur maximale h₁ de la première portion de corps (18) et le flanc de bande profilée (13) de la deuxième bande profilée (2) à la hauteur maximale h₂ de la deuxième portion de corps (19), avec h₂ ≤ h₁.

3. Profil de bande de roulement selon les caractéristiques de la revendication 1 ou 2,
dans lequel h₁ satisfait à la relation (1/2) T ≤ h₁ ≤ (2/3)T, T étant la profondeur de rainure maximale de la rainure périphérique (6) mesurée dans la rainure périphérique (6).

4. Profil de bande de roulement selon les caractéristiques d'une ou plusieurs des revendications précédentes,
dans lequel le contour de coupe, à partir de la position P dans la direction du flanc de bande profilée (12) de la première bande profilée (1) est réalisé de manière à croître linéairement en formant un angle d'inclinaison α avec la direction axiale A et dans lequel le contour de coupe, à partir de la position P dans la direction du flanc de bande profilée (13) de la deuxième bande profilée (2) est réalisé de manière à croître linéairement en formant un angle d'inclinaison β avec la direction axiale A, avec α > β.

5. Profil de bande de roulement selon les caractéristiques d'une ou plusieurs des revendications précédentes,
dans lequel la surface de corps (15) limitant radialement vers l'extérieur le corps de support (14) est réalisée avec une longueur L croissant de manière continue, dans sa longueur d'étendue L mesurée dans la direction périphérique U dans la position P avec son minimum Lₘᵢₙ et des deux côtés de la position P axialement vers l'extérieur dans la direction du flanc de bande profilée adjacent respectif (12, 13).

6. Profil de bande de roulement selon les caractéristiques de la revendication 1,
dans lequel la longueur L de la surface de corps (15) dans sa position d'intersection avec le flanc de bande profilée (12) de la première bande profilée (1) présente la longueur d'étendue maximale L₁ₘₐₓ de la première portion (18) et dans sa position d'intersection avec le flanc de bande profilée (13) de la deuxième bande profilée (2) présente la longueur d'étendue maximale L₂ₘₐₓ de la deuxième portion (19), avec L₁ₘₐₓ > L₂ₘₐₓ.

7. Profil de bande de roulement selon les caractéristiques de la revendication 6,
dans lequel L₁ₘₐₓ est réalisé de manière à satisfaire à la relation 7 mm ≤ L₁ₘₐₓ ≤ 15 mm et L₂ₘₐₓ est réalisé de manière à satisfaire à la relation 5 mm ≤ L₂ₘₐₓ ≤ 10 mm.

8. Profil de bande de roulement selon les caractéristiques d'une ou plusieurs des revendications précédentes,
dans lequel les corps de support (14) disposés les uns derrière les autres dans la direction périphérique U dans la rainure périphérique (6) sont réalisés avec un espacement d de leurs surfaces de corps radialement extérieures (15) l'une de l'autre mesuré dans la direction périphérique U, d satisfaisant à la relation L₁ₘₐₓ ≤ d ≤ 5 L₁ₘₐₓ.

9. Profil de bande de roulement selon les caractéristiques d'une ou plusieurs des revendications précédentes,
dans lequel la première bande profilée (1) limite la rainure périphérique (6) dans la direction axiale A vers le côté tourné vers l'épaulement du pneu réalisé sous forme d'épaulement extérieur (OU) et la deuxième bande profilé (2) limite la rainure périphérique (6) dans la direction axiale A vers le côté tourné vers l'épaulement du pneu réalisé sous forme d'épaulement intérieur (IN).

10. Profil de bande de roulement selon les caractéristiques de la revendication 8,
dans lequel la première bande profilée (1) est une bande profilée de l'épaulement du pneu réalisé sous forme d'épaulement extérieur (OU).

11. Profil de bande de roulement selon les caractéristiques d'une ou plusieurs des revendications précédentes,
dans lequel la première bande profilée (1) est une nervure périphérique.
